# EUROPÄISCHE PATENTANMELDUNG

(11) **EP 1 793 459 A1**
(43) Veröffentlichungstag der Anmeldung: **06.06.2007**
(21) Anmeldenummer: 05026253.4
(22) Anmeldetag: 01.12.2005
(51) Int. Cl.: H01R 39/08, H02K 13/00

(54) **Schleifringwelle für einen elektrischen Generator**

(71) Anmelder: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Murawa-Galen, Markus, 44623 Herne (DE); Pohlmann, Friedhelm, Dr., 45355 Essen (DE); Reinhardt, Helmut, 45470 Mülheim an der Ruhr (DE)

(57) **Zusammenfassung**

Eine Schleifringwelle (14) für einen elektrischen Generator (10) mit mindestens einem Schleifring (26) zum Herstellen einer elektrischen Verbindung zwischen einer auf einer Rotorwelle (16) des elektrischen Generators (10) angeordneten elektromagnetischen Spule (20) und mindestens einem Schleifkontakt (28) ist erfindungsgemäß dadurch gekennzeichnet, dass die Schleifringwelle (14) zumindest bereichsweise eine unbenetzbare Oberflächenstruktur (36) aufweist.

## Beschreibung

Die Erfindung betrifft eine Schleifringwelle für einen elektrischen Generator mit mindestens einem Schleifring zum Herstellen einer elektrischen Verbindung zwischen einer auf einer Rotorwelle des elektrischen Generators angeordneten elektromagnetischen Spule und mindestens einem Schleifkontakt. Die Erfindung betrifft ferner eine Rotorwelle mit einer derartigen Schleifringwelle. Darüber hinaus betrifft die Erfindung einen elektrischen Generator mit einer eine derartige Schleifringwelle aufweisenden Rotorwelle.

Bei elektrischen Generatoren wird zwischen Gleichstromgeneratoren und Wechselstromgeneratoren unterschieden. Gleichstromgeneratoren weisen einen feststehenden Stator mit einer stromdurchflossenen Erregerwicklung auf. Diese Erregerwicklung erzeugt ein statisches magnetisches Feld im Bereich einer innerhalb des Stators angeordneten Rotorwelle, welche eine zur Erregerwicklung parallel geschaltete so genannte Ankerwicklung aufweist. Bei Drehung der Rotorwelle wird im Anker ein elektrischer Gleichstrom erzeugt, der über einen an der Rotorwelle befestigten Schleifring mittels eines Schleifkontakts, wie etwa einer Kohlebürste abgegriffen wird.

Ein Wechselstromgenerator weist einen Stator mit einer so genannten Statorwicklung, die in der Regel in drei Wicklungssträngen ausgeführt ist, auf. Der innerhalb des Stators um eine Rotorwelle drehbare Rotor hingegen weist eine Erregerwicklung auf. Am Ende der Rotorwelle sind Schleifringe angebracht. Beim Betrieb des Wechselstromgenerators wird über mittels an den Schleifringen schleifenden Schleifkontakten, wie etwa Kohlebürsten, von außen her der Erregerwicklung Strom zugeführt. Die Erregerwicklung erzeugt dabei ein magnetisches Erregerfeld im Bereich der sie umgebenden Statorwicklung. Bei Drehung des Rotors um die Rotorwelle wird nun durch das sich dabei mitdrehende, von der Erregerwicklung erzeugte Magnetfeld ein Wechselstrom in die Spulenwicklungen des Stators induziert.

Beim Betrieb der im Stand der Technik bekannten elektrischen Generatoren entsteht durch die Reibung des Schleifkontakts an dem Schleifring erheblicher Abrieb, wie etwa Kohlenstaub bei Verwendung von Kohlenbürsten als Schleifkontakte. Dieser Abrieb ist elektrisch leitend und verschmutzt die Schleifringwelle oft derart, dass es zu Spannungsüberschlägen mit dem Schleifring kommt. Um dies zu verhindern sind daher bei den im Stand der Technik bekannten Generatoren kurze Wartungsintervalle mit aufwändigen Reinigungsprozeduren notwendig.

Eine der Erfindung zugrunde liegende Aufgabe besteht darin, einen elektrischen Generator mit einem Schleifring der eingangs genannten Art dahingehend zu verbessern, dass die Wartungsintervalle des elektrischen Generators verlängert werden können.

Diese Aufgabe ist erfindungsgemäß mit einer gattungsgemäßen Schleifringwelle gelöst, die zumindest bereichsweise eine unbenetzbare Oberflächenstruktur aufweist. Die Aufgabe ist ferner mit einer Rotorwelle gelöst, die mit einer derartigen erfindungsgemäßen Schleifringwelle versehen ist. Darüber hinaus ist die Aufgabe mit einem elektrischen Generator gelöst, der eine derartige erfindungsgemäße Rotorwelle aufweist.

Durch das Versehen der Schleifringwelle mit einer unbenetzbaren bzw. flüssigkeitsabweisenden Oberflächenstruktur wird das Absetzen von elektrisch leitfähigem Abrieb auf der Schleifringwelle verhindert oder zumindest reduziert. Die Oberflächenstruktur erhält ihre flüssigkeitsabweisende Eigenschaft durch das Vorsehen mikroskopischer Unebenheiten auf der Oberfläche. Diese mikroskopischen Unebenheiten auf der Oberfläche verringern die Kontaktfläche einer Flüssigkeit mit der Oberfläche und begünstigen damit ein durch die Oberflächenspannung der Flüssigkeit hervorgerufenes Abperlen der Flüssigkeit von der Oberfläche. Die mikroskopischen Unebenheiten auf der flüssigkeitsabweisenden Oberflächenstruktur haben aber auch zur Folge, dass Festkörperpartikel, wie etwa von Schleifringbürsten abgeriebener Kohlenstaub, nur eine kleine Kontaktfläche mit der Oberfläche des Schleifrings besitzen.

Die Haftung der Festkörperpartikel an der Schleifringoberfläche ist damit stark verringert, was dazu führt, dass die Abriebpartikel durch Eigenschwingungen, Luft- bzw. Gasströme bzw. durch die bei Drehung der Rotorwelle auftretenden Zentrifugalkräfte sich von dem Schleifring lösen. Eine Ablagerung des Abrieb und allgemein eine Verschmutzung des Schleifrings wird dadurch weitgehend verhindert. Damit wird ein Spannungsüberschlag zwischen dem mindestens einen Schleifring der Schleifringwelle und anderen Bereichen der Schleifringwelle bzw. im Falle von mindestens zwei Schleifringen zwischen den Schleifringen verhindert. Weiterhin können die Wartungsintervalle entsprechend verlängert werden.

Bei den noch notwendigen Wartungsvorgängen kann auf eine aufwendige Reinigung verzichtet werden. Nach einer längeren Betriebszeit dennoch an der Schleifringwellenoberfläche abgelagerte Schmutzpartikel, können durch einfache Maßnahmen, wie etwa Abspülen mit Wasser oder anderen Flüssigkeiten problemlos entfernt werden. Die auf der Schleifringwellenoberfläche aufliegenden Schmutzpartikel besitzen aufgrund der mikroskopischen Unebenheiten aufweisenden Oberflächenstruktur des Schleifrings nur eine kleine Kontaktfläche mit dem Schleifring. Die Schmutzpartikel werden daher von den an der Oberfläche des Schleifrings abperlenden Flüssigkeitstropfen mitgerissen und weggespült. Dieser Reinigungsvorgang kann möglicherweise ohne ein aufwendiges Ausbauen der Rotorwelle aus dem Generator erfolgen. Weiterhin ermöglicht die erfindungsgemäße Lösung eine Verlängerung der Lebensdauer der Schleifringwelle, da die Schleifringoberfläche bei den noch verbleibenden Wartungen nur geringfügig beansprucht wird. Die erfindungsgemäße Lösung kann bei allen einen Schleifring verwendenden elektrischen Generatoren, d.h. sowohl bei innenerregten als auch bei außenerregten Generatoren, insbesondere bei den eingangs beschriebenen Gleichstrom- und Wechselstromgeneratoren verwendet werden.

In einer zweckmäßigen Ausführungsform der Schleifringwelle weist der Schleifring eine Schleiffläche zum Entlangschleifen an dem mindestens einen Schleifkontakt sowie sich daran anschließende Seitenbereiche auf und erstreckt sich die unbenetzbare Oberflächenstruktur weiterhin über mindestens einen Seitenbereich des mindestens einen Schleifrings. Die Seitenbereiche umfassen insbesondere quer zur Schleiffläche des Schleifrings verlaufende und an einen Achsenabschnitt der Schleifringwelle anschließende Randbereiche des Schleifrings. Dadurch dass sich die unbenetzbare Oberflächenstruktur weiterhin über mindestens einen Seitenbereich des mindestens einen Schleifrings erstreckt, wird eine Ablagerung von Abrieb in dem gesamten sich unmittelbar an die Schleiffläche angrenzenden Bereich der Schleifringwelle und damit ein Spannungsüberschlag mit großer Sicherheit verhindert.

Vorteilhafterweise erstreckt sich die unbenetzbare Oberflächenstruktur im Bereich der Schleifringwelle zwischen den Schleifringen, und insbesondere über daran anschließende Seitenbereiche der Schleifringe. Damit wird ein Spannungsüberschlag zwischen den Schleifringen der Schleifringwelle wirkungsvoll verhindert.

In einer erfindungsgemäß zweckmäßigen Ausführungsform weist die unbenetzbare Oberflächenstruktur des Schleifkontakts eine gezielt auf eine Unbenetzbarkeit durch ein flüssiges Medium, insbesondere Wasser abgestimmte Oberflächenrauhigkeit auf. Vorteilhafterweise ist die unbenetzbare Oberflächenstruktur des Schleifkontakts zur Erzeugung des "Lotus-Effekts" gestaltet. Insbesondere sollte die Oberflächenrauhigkeit derart gestaltet sein, dass die Oberfläche mit einem Wassertropfen einen Kontaktwinkel von > 90° bildet. Das Wasser berührt damit die Oberfläche nur an einigen Stellen und zieht sich aufgrund seiner Oberflächenspannung zu einer Kugel zusammen. Zweckmäßigerweise weist die unbenetzbaren Oberflächenstruktur des Schleifrings 5 bis 20 µm hohe Strukturen auf, die 5 bis 50 µm voneinander entfernt sind. Bei einer derartigen Oberfläche ist die Kontaktfläche mit Schmutzpartikeln so gering, dass diese nur wenig daran haften. Die trotzdem auf der Oberfläche aufliegenden Schmutzpartikel werden bei Wasserspülung durch die abperlenden Wassertropfen mitgerissen und weggespült.

Um den erfindungsgemäßen Schleifring fertigungstechnisch möglichst effizient herstellen zu können, ist es vorteilhaft, wenn die unbenetzbare Oberflächenstruktur des Schleifkontakts von einer mittels eines Beschichtungsverfahrens aufgebrachten Schicht gebildet ist. Insbesondere kann so genannter "Lotus-Lack" auf den Schleifringgrundkörper aufgebracht werden.

Weiterhin ist es vorteilhaft, wenn die unbenetzbare Oberflächenstruktur der Schleifringwelle von einer Schicht aus Mikrokristallen, insbesondere epicuticularen Wachskristallen gebildet ist. Derartige Wachskristalle sind aus den biologischen Systemen bekannt und bewirken den so genannten "Lotus-Effekt". Es können aber auch zu den epicuticularen Wachskristallen äquivalente Kristallsysteme zum Einsatz kommen.

Es ist weiterhin fertigungstechnisch vorteilhaft, wenn die unbenetzbare Oberflächenstruktur des Schleifrings mittels Strukturierung eines Grundwerkstoffs des Schleifrings, wie etwa durch Verfahren der Mikro- und/oder Nanotechnologie gebildet ist.

Nachfolgend wird ein Ausführungsbeispiel eines erfindungsgemäßen elektrischen Generators mit einer Schleifringwelle anhand der beigefügten schematischen Zeichnungen näher erläutert. Es zeigt:
- Fig. 1: einen Längsschnitt durch ein Ausführungsbeispiel eines erfindungsgemäßen elektrischen Generators mit einer Schleifringwelle, sowie
- Fig. 2: ausschnittsweise eine Schnittansicht durch eine Schleifringwelle gemäß Fig. 1.

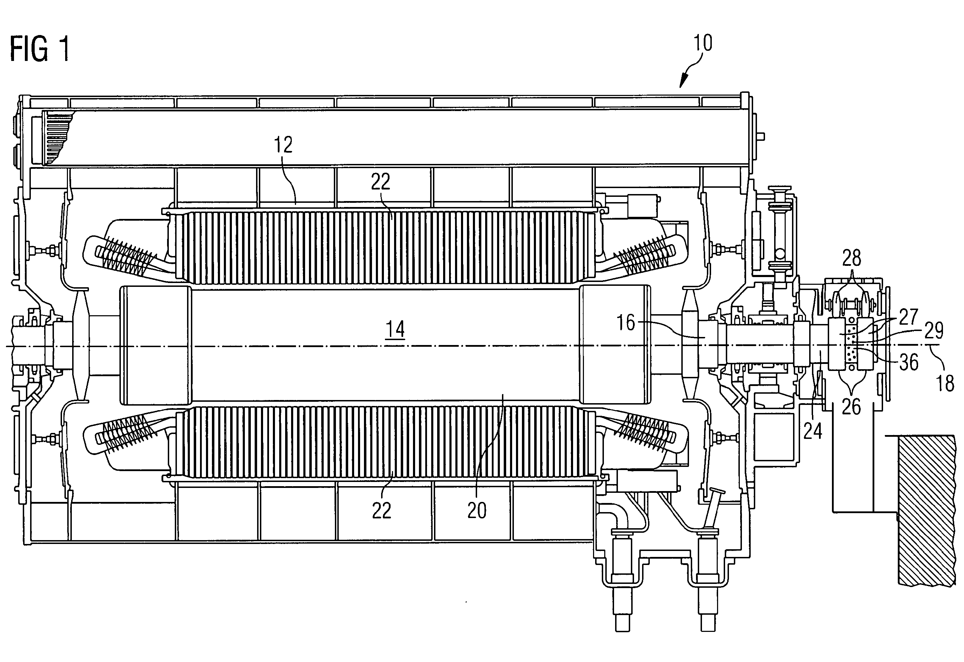

Fig. 1 zeigt einen elektrischen Generator 10 mit einem feststehenden Stator 12 sowie einem innerhalb des Stators 12 gelagerten Rotor 14. Der Rotor 14 weist eine Rotorwelle 16 auf, die um eine Rotorachse 18 drehbar ist. Weiterhin weist der Rotor 14 eine Erregerwicklung 20 zur Erzeugung eines magnetischen Feldes auf. Bei Drehung des Rotors 14 um die Rotorachse 18 induziert das von der Erregerwicklung 20 erzeugte magnetische Feld einen Wechselstrom in am Stator angeordneten Statorwicklungen eines Blechpackets 22.

An die Rotorwelle 16 schließt sich eine Schleifringwelle 24 an, die als angewachsene Welle ausgebildet ist. Die Schleifringwelle 24 weist zwei Schleifringe 26 auf. Die Schleifringe 26 werden mittels als Kohlebürsten ausgebildeten Schleifkontakten 28 elektrisch kontaktiert. Bei Drehung der Rotorwelle 16 schleifen die Schleifkontakte 28 an Schleifflächen 27 der Schleifringe 26 entlang. Beim Betrieb des elektrischen Generators 10 wird die Erregerwicklung 20 des Rotors 14 über die Schleifkontakte 28 und die Schleifringe 26 zur Erzeugung des magnetischen Erregerfeldes mit Strom versorgt.

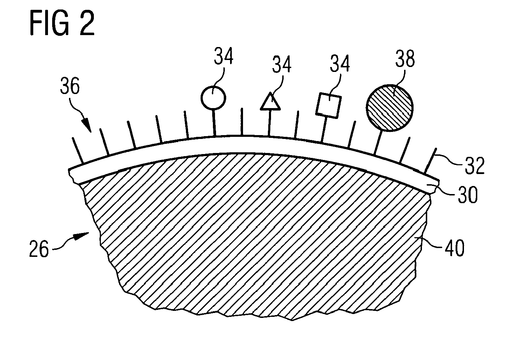

Ein Zwischenbereich 29 der Schleifringwelle 14 zwischen den beiden Schleifringen 26 sowie sich daran anschließende Seitenbereiche der Schleifringe 26 weisen eine durch ein flüssiges Medium unbenetzbare Oberflächenstruktur auf. Diese Oberflächenstruktur ist insbesondere zur Erzeugung des "Lotus-Effekts" strukturiert. Fig. 2 zeigt ausschnittsweise eine Schnittansicht der in Fig. 1 dargestellten Schleifringwelle 24 in dem Zwischenbereich 29. Die Oberflächenstruktur 36 der Schleifringwelle 24 ist dabei von einer Oberflächenschicht 30 aus Mikrokristallen 32, beispielsweise epicuticularen Wachskristallen oder äquivalenten Kristallstrukturen auf dem Grundwerkstoff 40 der Schleifringwelle 24 gebildet. Die Oberflächenschicht 30 weist dabei eine Oberflächenrauhigkeit auf, die gezielt auf eine Unbenetzbarkeit durch ein flüssiges Medium abgestimmt ist. In einer alternativen Ausführungsform kann auch die Oberfläche des Grundwerkstoffs 40 der Schleifringwelle 24 direkt durch Verfahren der Mikro- und/oder Nanotechnologie entsprechend strukturiert werden.

Die Oberflächenrauhigkeit der Schicht 30 bewirkt, dass der Kontaktwinkel eines Flüssigkeitstropfens 38 mit den Mikrokristallen 32 so groß ist, dass sich der Flüssigkeitstropfen 38 aufgrund seiner Oberflächenspannung zu einer Kugel zusammenzieht. Auch Partikel 34, insbesondere aus Abrieb von den Schleifkontakten 28 während dem Betrieb des Generators 10, besitzen ebenfalls nur eine kleine Kontaktfläche mit den Mikrokristallen 32. Sie werden daher durch Eigenschwingungen, Luft- bzw. Gasströme bzw. durch Zentrifugalkraft währen dem Betrieb des Generators 10 zum überwiegenden Teil weggerissen. Weiterhin auf der Oberflächenstruktur 36 der Schleifringwelle 24 verbleibende Partikel 34 können durch Besprühung mit Flüssigkeit einfach entfernt werden. Die aufgrund ihrer Oberflächenspannung als Kugel ausgebildeten Flüssigkeitstropfen 39 reißen diese Partikel 34 mit sich mit.

## Patentansprüche

1. Schleifringwelle (24) für einen elektrischen Generator (10) mit mindestens einem Schleifring (26) zum Herstellen einer elektrischen Verbindung zwischen einer auf einer Rotorwelle (16) des elektrischen Generators (10) angeordneten elektromagnetischen Spule (20) und mindestens einem Schleifkontakt (28),
**dadurch gekennzeichnet, dass**
die Schleifringwelle (26) zumindest bereichsweise eine unbenetzbare Oberflächenstruktur (36) aufweist.

2. Schleifringwelle nach Anspruch 1,
**dadurch gekennzeichnet, dass**
der Schleifring (26) eine Schleiffläche (27) zum Entlangschleifen an dem mindestens einen Schleifkontakt (28) sowie sich daran anschließende Seitenbereiche aufweist und sich die unbenetzbare Oberflächenstruktur (36) weiterhin über mindestens einen Seitenbereich des mindestens einen Schleifrings (26) erstreckt.

3. Schleifringwelle nach Anspruch 1 oder 2,
**gekennzeichnet durch**
mindestens zwei Schleifringe (26),
wobei sich die unbenetzbare Oberflächenstruktur (36) im Bereich der Schleifringwelle (24) zwischen den Schleifringen (26) und insbesondere über daran anschließende Seitenbereiche der Schleifringe (26) erstreckt.

4. Schleifring nach einem der vorausgehenden Ansprüche,
**dadurch gekennzeichnet, dass**
die unbenetzbare Oberflächenstruktur (36) eine gezielt auf eine Unbenetzbarkeit durch ein flüssiges Medium, insbesondere Wasser,
abgestimmte Oberflächenrauhigkeit aufweist.

5. Schleifring nach einem der vorausgehenden Ansprüche,
**dadurch gekennzeichnet, dass**
die unbenetzbare Oberflächenstruktur (36) zur Erzeugung des "Lotus-Effekts" gestaltet ist.

6. Schleifring nach einem der vorausgehenden Ansprüche,
**dadurch gekennzeichnet, dass**
die unbenetzbare Oberflächenstruktur (36) von einer mittels eines Beschichtungsverfahrens aufgebrachten Schicht (30) gebildet ist.

7. Schleifring nach einem der vorausgehenden Ansprüche,
**dadurch gekennzeichnet, dass**
die unbenetzbare Oberflächenstruktur (36) des Schleifrings (26) von einer Schicht aus Mikrokristallen (32), insbesondere epicuticularen Wachskristallen, gebildet ist.

8. Schleifring nach einem der vorausgehenden Ansprüche,
**dadurch gekennzeichnet, dass**
die unbenetzbare Oberflächenstruktur (36) mittels Strukturierung eines Grundwerkstoffs (40) des Schleifrings (26), wie etwa durch Verfahren der Mikro- und/oder Nanotechnologie gebildet ist.

9. Rotorwelle (16) eines elektrischen Generators (10) mit einer Schleifringwelle (26) nach einem der vorausgehenden Ansprüche.

10. Elektrischer Generator (10) mit einer Rotorwelle (16) nach Anspruch 9.
